# EUROPÄISCHE PATENTANMELDUNG

(11) **EP 0 666 089 A1**
(43) Veröffentlichungstag der Anmeldung: **09.08.1995**
(21) Anmeldenummer: 94101663.6
(22) Anmeldetag: 03.02.1994
(51) Int. Cl.: A63B 55/08

(54) **Motorangetriebener Golfwagen**

(71) Anmelder: Schulte, Klaus, Dr., D-44149 Dortmund (DE)
(72) Erfinder: Schulte, Klaus, Dr., D-44149 Dortmund (DE)
(74) Vertreter: Schulte, Jörg, Dipl.-Ing.

(57) **Zusammenfassung**

Für den Transport des Golfbestecks und des Zubehörs sowie von Kleinlasten wie Briefe, Päckchen und Pakete und eingekaufte Waren dient ein Wagen (1) mit ausgesprochen geringem Eigengewicht. Dieser Wagen (1) besteht aus Aluminium-Vierkantrohren, wobei das den Fahrhebel (8) darstellende Aluminiumrohr in das den Gestellrahmen (7) darstellende Aluminiumrohr einschiebbar ist. In der Ausziehposition kann der Fahrhebel (8) am Gestellrahmen (7) festgelegt werden, so daß dann eine leichte Handhabung möglich ist. Die die Räder (3, 5) tragenden Achsen (4, 6) sind miteinander verbunden bzw. in Achsverbindungshülsen (34) des mittig angeordneten Schneckenradgetriebes (35) eingeführt. Diese Achsen sind mit zwei Achsrillen (37, 39) ausgerüstet, wobei nur die innere Achsrille (37) einen Kuppelvierkant (38) für die Räder (3, 5) aufweist, so daß beim Sitz in der äußeren Achsrille (39) ein Leerlauf erreicht ist. Damit kann der Wagen 1 in jeder beliebigen Position leicht gehandhabt und verfahren werden.

## Beschreibung

Die Erfindung betrifft einen Wagen zum Transport des Golfbestecks und Zubehörs sowie von Kleinlasten wie Briefe, Päckchen und Pakete und eingekaufte Waren mit einem lenkbaren Fahrgestell, das aus den im Abstand zueinander gehaltenen, um Achsen drehenden Rädern, dem annähernd senkrecht dazu angeordneten und die Halterungen für das Bag aufweisenden und auf der Rückseite die Batterie für den Antriebsmotor tragenden Gestellrahmen besteht, dem ein in der Wirklänge veränderbarer Fahrhebel mit Griff zugeordnet ist.

Bei bekannten Golfwagen dieser Art werden die Räder mit einem Antriebsmotor gekoppelt, um dessen Handhabung damit zu erleichtern. Solche indirekte Antriebe sind in mehrfacher Ausbildung bekannt (DE-OS 33 02 014). Hierbei ist von Nachteil, daß ein gesondertes Fahrwerk benötigt wird, das vor allem beim Transport im Auto so sperrig ist, daß es gar nicht oder nur mit erheblichem Zusatzaufwand transportiert werden kann. Gleiches gilt im Prinzip auch für den aus der DE-OS 36 41 036 bekannten Golfwagen, bei dem ein drittes Rad vorgesehen ist, auf das der Antrieb einwirken soll. Nachteilig ist auch hier, daß ein umständlicher Aufbau erforderlich ist und daß das dritte Rad eine erhebliche Behinderung darstellt, wobei das Bag und das Fahrgestell getrennte Einheiten darstellen. Ein ähnlicher Golfwagen ist beispielsweise auch der DE-OS 26 34 765 zu entnehmen, bei der ein aufwendiges Fahrgestell mit einem ebenfalls sehr aufwendig ausgebildeten und angeordneten Antriebsmotor kombinierbar ist. Eine solche Ausbildung kann in einem üblichen Pkw nicht ohne weiteres transportiert werden, so daß der Verkauf von vornherein behindert ist. Im heutigen Golfsport ist aber das Bestreben unverkennbar, nicht nur immer auf einem bestimmten heimischen Golfplatz, sondern auch auf dem benachbarten oder gar weiter entfernten Golfplätzen zu spielen, so daß ein Zwischentransport eines entsprechenden Golfwagens erforderlich ist. Dies ist auch bei Golfwagen kaum möglich, wie sie der DE-PS 37 14 066 zu entnehmen und die mit einem selbsttragend ausgebildeten Gehäuse versehen sind, in die die Batterie integriert ist, während der Motor dem dritten, voreilenden Rad zugeordnet ist. Dieses dritte Rad ist mit dem Gehäuse fest verbunden und verlängert somit die Gesamtmaße des Golfwagens erheblich, wodurch wiederum der Transport im Pkw erschwert ist. Aus der US-PS 4,106,583 ist schließlich ein im Aufbau einfacher und von daher gewichtsmäßig günstig ausgelegter Golfwagen bekannt, bei dem die Antriebsmotoren den beiden größeren Rädern zugeordnet sind, während das eigentliche Fahrgestell durch ein drittes voreilendes Rad abgestützt wird. Der Gestellrahmen, an dem die Räder über entsprechende Lenker angebracht sind, trägt nicht nur das Golfbag sondern auch die Batterie, aus der die den Achsen der Räder zugeordneten Antriebsmotore versorgt werden. Zum Transport werden die Lenker eingeklappt, wobei gleichzeitig auch der Fahrhebel um ein Gelenk verschwenkt und an den Gestellrahmen herangeschwenkt wird. Dadurch ergeben sich relativ günstige Transportabmessungen für den Golfwagen, wozu es allerdings erforderlich ist, die Batterie vorab zu demontieren. Dies erfordert einen nicht unerheblichen Montageaufwand, wozu noch hinzukommt, daß das dritte, vorauseilende Rad abgenommen werden muß, damit es beim Transport nicht im Wege ist. Besonders nachteilig ist aber, daß die beiden auf die Achsen der beiden Räder einwirkenden Antriebsmotoren synchronisiert werden müssen, um einen Gleichlauf der Räder zu gewährleisten. Dies ist sehr schwierig bzw. überhaupt nicht zu bewerkstelligen, so daß der bekannte Golfwagen praktisch immer von Hand geführt werden muß, um die unterschiedlichen Antriebsleistungen bzw. -wirkungen auszugleichen. Nachteilig ist schließlich noch, daß für den Schwenkvorgang des Fahrhebels eine versetzte Anordnung erforderlich ist, die eine aufwendigere Bauart nach sich zieht. Schließlich ist das Eigengewicht derartiger Golfwagen wegen der zum Einsatz kornenden Stahlmaterialien relativ hoch.

Der Erfindung liegt daher die Aufgabe zugrunde, einen Wagen mit geringem Eigengewicht, guten Fahr- und Leerlaufeigenschaften zu schaffen, der auch mit Antriebsmotor gut zu transportieren ist.

Die Aufgabe wird erfindungsgemäß dadurch gelöst, daß die Achsen der Räder verlängert und miteinander verbunden ausgebildet und in Achsverbindungshülsen eines mit dem Antriebsmotor verbundenen Radgetriebes einführbar sind, daß für jedes mit einem Druckschnepper ausgerüstete Rad im Abstand zueinander ausgebildete Achsrillen vorgesehen sind, von denen nur die in Richtung Radgetriebe angeordnete Achsrille mit einem, mit den Rädern korrespondierenden Kuppelvierkant ausgerüstet ist und daß der Gestellrahmen und der Fahrhebel aus Aluminiumrohren bestehen.

Bei einem derart ausgebildeten Wagen ist zunächst einmal schon dadurch ein geringes Eigengewicht zu verzeichnen, weil die das Gerüst bildenden Teile aus Aluminiumrohren bestehen. Diese haben die notwendigen Trag- und Stabilitätseigenschaften, sind aber wesentlich leichter als Stahlrohre oder ähnliches. Darüber hinaus wird das Gewicht dadurch gering gehalten, daß Räder vorgesehen sind, die problemlos abgenommen werden können, wenn dies aus Transport- oder sonstigen Gründen zweckmäßig ist. Besonders vorteilhaft ist aber bei dieser Anordnung der Räder, daß diese bei Bedarf und das vor allem, wenn der Antriebsmotor aus irgendwelchen Gründen ausfallen sollte, in eine Leerlaufposition, nämlich in die äußere Achsrille geschoben werden können, so daß dann der Wagen wie ein motorfreier Wagen betätigt werden kann. Dies erleichtert den Betrieb nicht nur in diesem Zustand, sondern auch generell bzw. fördert die Akzeptanz erheblich. Durch die Verbindung der Achsen und der Zuordnung zu nur einem Radgetriebe bzw. einem Antriebsmotor erübrigt sich jedwede Abstimmung (Synchronisierung), so daß die Steuerung des Wagens vereinfacht werden kann.

Nach einer zweckmäßigen Ausführungsform der Erfindung ist vorgesehen, daß der Fahrhebel in den Gestellrahmen einschiebbar ist, wobei am oberen Rand des Gestellrahmens ein in entsprechende Kerben im Fahrhebel einrastender Schnepper vorgesehen ist. Der Fahrhebel und der Gestellrahmen sind damit teleskopierbar, so daß ein Versatz der beiden Teile und damit eine aufwendige Bauform nicht erforderlich ist. Mit dem Einschieben des Fahrhebels in den Gestellrahmen verkürzt sich die Gesamtlänge deutlich, wobei der Fahrhebel bis zum Griff eingeschoben werden kann, so daß sich dann eine natürliche Begrenzung ergibt. Bezüglich des Ausziehens des Fahrhebels aus dem Gestellrahmen sind Kerben und ist der Schnepper vorgesehen, so daß auch eine wirksame und einfach zu erreichende Verbindung gegeben ist.

Besonders zweckmäßig ist es, wenn der Fahrhebel und der Gestellrahmen als Aluminium-Vierkantrohre ausgebildet sind, da dann beim Einschieben und Herausziehen des Fahrhebels aus bzw. in den Gestellrahmen immer die gleiche Position sicher beibehalten wird. Darüber hinaus verfügen solche Vierkantrohre über eine vorteilhafte Stabilität.

Nach einer weiteren zweckmäßigen Ausführungsform ist vorgesehen, daß mehrere mit dem Schnepper zusammenwirkende Kerben im Fahrhebel über dessen Länge verteilt ausgebildet sind, auf jeden Fall aber jeweils an seinem unteren Rand vorgesehen sind. Aufgrund der verteilten Anordnung von Kerben besteht die Möglichkeit, den Fahrhebel mehr oder weniger weit aus dem Gestellrahmen herauszuziehen, so daß eine einfache Anpassung an die jeweilige Körpergröße möglich ist. In der Regel reicht es aber aus, wenn am unteren Rand des Fahrhebels eine solche Kerbe vorgesehen ist, da nur im ausgezogenen Zustand des Fahrhebels eine wirkliche Festlegung notwendig ist. Beim eingeschobenen Zustand des Fahrhebels ist eine solche Festlegung nicht erforderlich, weil sich der Fahrhebel dann mit seinem Griff am oberen Rand des Gestellrahmens abstützt.

Um ein sicheres Einrasten des Schneppers zu gewährleisten, sieht die Erfindung vor, daß als Schnepper ein mit einer Zugfeder gegen das Fahrgestell angedrückter Schwenkhebel mit Zapfen dient. Dieser Zapfen rastet jeweils in die vorgesehene Kerbe (oder auch Bohrung) oder in die Kerben ein, wenn über die Höhe verteilt mehrerer solcher Kerben vorgesehen sind. Der Schwenkhebel gibt darüber hinaus die Möglichkeit, nachzuhelfen, wenn aus Versehen oder wegen einer zu schwachen oder ggf. sogar gebrochenen Zugfeder der Schnepper nicht automatisch einrastet. Dann wird der Schwenkhebel einfach von Hand mit seinem Zapfen in eine Kerbe eingeschoben, so daß dann die wirksame Festlegung des Fahrhebels im Gestellrahmen erreicht ist.

Zur Erhöhung der Standsicherheit des Wagens im ausgezogenen Zustand kann es zweckmäßig sein, wenn der Abstand der Räder zum Fahrgestell bzw. zum Gestellrahmen vergrößert wird. Dies wird gemäß der Erfindung dadurch erreicht, daß die Räder und die sie verbindenden Achsen über einen Querholm und einen Doppelbügel, von dem ein Teilbügel um die Lagerung am Querholm verschwenkbar ist, mit dem Gestellrahmen verbunden ist. Dadurch ist die Möglichkeit gegeben, den einen Teilbügel mit dem gegenüberliegenden Teilbügel und dem der sie verbindenden Achse und den Rädern entweder weiter weg vom Gestellrahmen oder näher heranzuschwenken, je nachdem welcher Abstand zur Erhöhung der Standsicherheit des gesamten Wagens benötigt wird. Dabei ist es vorteilhaft, wenn die den Doppelbügel bildenden Teilbügel über ein bewegliches Halteschloß miteinander verbunden sind. Dadurch ist die Möglichkeit gegeben, den Abstand der Räder und der Achse zum Gestellrahmen jeweils zu verändern bzw. den Gegebenheiten anzupassen und dabei auch jeweils so festzulegen, daß ein unbeabsichtigtes Verschieben nicht möglich ist.

Eine andere Möglichkeit der Veränderung des Abstandes der Achse mit den Rädern vom Gestellrahmen ist die, bei der die Räder und die sie verbindenden Achsen über einen im Querholm schwenkbar gelagerten Rohrbogen mit dem Gestellrahmen verbunden sind, der an den freien Enden die Achshalterungen aufweist. Hierbei so wie bei der soeben beschriebenen Ausführung ist auch die Möglichkeit gegeben, die Lagerung jeweils in der Höhe zu verschwenken bzw. zu verändern, beispielsweise durch Auf- und Abwärtsbewegen des Querholms beispielsweise im Zusammenhang mit dem Verschwenken des Fahrhebels, so daß dann automatisch sich auch die Achse mit den Rädern entsprechend verschwenkt, um den Abstand zum Gestellrahmen zu verändern. Der Rohrbogen gibt darüber hinaus die Möglichkeit, endseitig die Achshalterungen anzubringen, die auf die gleiche Art und Weise auch an den Enden des jeweiligen Teilbügels vorgesehen sind, um auf diese Art und Weise einen Leichtlauf der Räder zu sichern. Hierzu sieht die Erfindung weiter vor, daß die Achshalterungen ein Kugellagergehäuse aufweisen, wodurch ein besonders vorteilhaftes Abstützen der Achse in den Achshalterungen möglich ist.

Ein besonders leichtes und quasi automatisches Mitverschwenken der Achse mit den Rädern beim Zusammenlegen des Fahrhebels und des Gestellrahmens ist dann gegeben, wenn der Fahrhebel um ein am oberen Rand des Gestellrahmens angeordnetes, versetzt dazu positioniertes Gelenk gegen diesen schwenkbar und in dieser Stellung in einen Haken einrastend ausgebildet ist. Mit Herabsenken des Fahrhebels wird dann gleichzeitig beispielsweise über den Rohrbogen, der mit dem Fahrhebel über Stangen verbunden ist, der Rohrbogen nach innen geschwenkt, so daß damit das gesamte "Paket" Golfwagen soweit wie möglich zusammengeschoben oder besser gesagt zusammengeschwenkt ist und damit eine günstige Transporteinheit bildet. Wird der Fahrhebel dann zur Benutzung des Wagens wieder ausgeschwenkt, zieht er gleichzeitig auch das Räderpaar und die Achse mit vom Gestellrahmen weg, so daß sich damit die günstigere Fahr- und Standposition einstellt. Zwar ist es nachteilig, wenn dieser Schwenkvorgang quasi automatisch abläuft, doch kann durch eine andere Art der Verbindung auch erreicht werden, daß der Schwenkvorgang der Achse und der Räder getrennt vom Zusammenlegen bzw. Bedienen des Fahrhebels abläuft.

Um den Wagen mit Antriebsmotor möglichst günstig bedienen zu können, sieht die Erfindung vor, daß dem Griff des Fahrhebels eine Bedienungstaste zum Umschalten von Vor- auf Rückwärtsfahrt zugeordnet ist, die mit dem Antriebsmotor verbunden ist. Der Griff liegt in der Hand des Benutzer des Wagens, so daß er sich beim Bedienen des Antriebsmotors überhaupt nicht bücken oder sonst wie bewegen muß. Er kann vielmehr aus dem Stand heraus den Antriebsmotor bedienen und damit auch die Geschwindigkeit einstellen, die in großem Bereich veränderbar ist. Darüber hinaus kann er mit dieser einen Bedienungstaste auch von Vor- auf Rückwärtsfahrt umschalten, wobei er den Freilauf wie schon erwähnt dadurch einstellen kann, daß er die beiden Räder durch Knopfdruck quasi von der Fahr- in die Leerlaufposition bzw. in die entsprechende Achsrille hineinschiebt. Ein besonders vielseitig einsetzbarer Antrieb ist der, bei dem das Radgetriebe als Schneckenradgetriebe mit
i = 24 : 1 ausgebildet und der Antriebsmotor ein Gleichstrommotor mit n = 3 100 U/min ist. Dadurch kann in optimaler Weise ein Gleichstrommotor eingesetzt und ein Gleichlauf beider Räder gewährleistet werden, der sowohl für Hänge wie für ebene Flächen vorteilhaft eingesetzt werden kann.

Die Erfindung zeichnet sich insbesondere dadurch aus, daß ein Wagen mit geringem Eigengewicht geschaffen ist, weil die Tragelemente alle aus leichtem Aluminiumrohr hergestellt sind. Diese Rohre können ineinander geschoben werden, so daß ein für den Transport günstiges Paket hergestellt werden kann, indem nämlich einfach der Fahrhebel in den Gestellrahmen eingeschoben wird. Gleichzeitig oder aber mit einem gesonderten Handgriff werden die Räder mit der sie verbindenden Achse in die Transportposition oder umgekehrt in die Fahrposition geschwenkt, so daß sich ein insgesamt stabiles Gesamtgebilde ergibt, das wie gesagt sich vorteilhaft auch für den Transport im Pkw eignet. Vorteilhaft ist weiter, daß auch bei Ausfall des Antriebsmotors der gesamte Wagen leicht weiter zu benutzen ist, weil eine günstige Leerlaufposition vorgegeben ist. Diese wird sehr schnell und ohne großen Aufwand dadurch erreicht, daß die beiden Räder geringfügig auf der Achse verschoben werden. Insgesamt gesehen ist damit vor allem ein Golfwagen geschaffen, der den hohen Ansprüchen des Sportlers aber auch des Normalspielers genügt, der sowohl auf dem Heimatplatz wie auch auf fremden Plätzen gleich gut einsetzbar ist und der leicht und sicher und damit auch von Damen gehandhabt werden kann.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine Seitenansicht des Wagens,
- Fig. 2: eine schematische Darstellung der Lagerung der Achse und ihrer Verstellbarkeit gegenüber dem Gestellrahmen,
- Fig. 3: einen Schnepper in Draufsicht,
- Fig. 4: eine Vorkopfansicht des fahrbereiten Wagens,
- Fig. 5: eine Seitenansicht eines Wagens mit klappbarem Fahrhebel in Fahrposition,
- Fig. 6: den Wagen gem. Fig. 5 in Transportposition,
- Fig. 7: die Halterung für die Golftaschen bzw. Bags und
- Fig. 8: eine Draufsicht auf die Achse mit Rädern und Antriebsmotor.

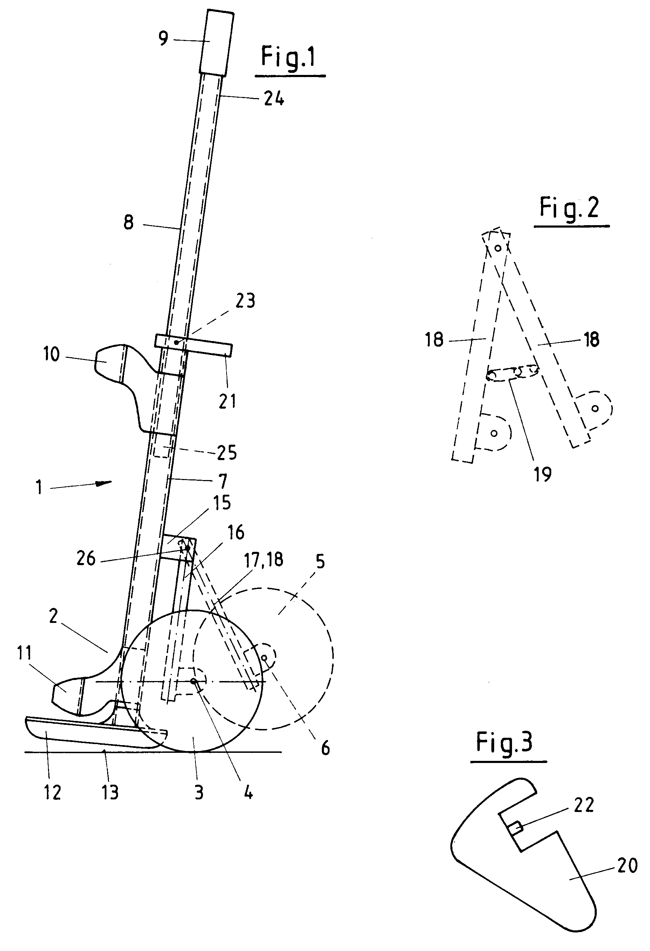

Fig. 1 zeigt einen Wagen 1 in Fahrposition, wobei die das Fahrgestell 2 mitbildenden Räder 3, 5 in Stand- und in Fahrposition wiedergegeben sind. Diese Räder 3, 5 sind mit Achsen 4, 6 ausgerüstet, die mit dem Gestellrahmen 7, wie weiter hinten noch näher erläutert wird, schwenkbar verbunden sind.

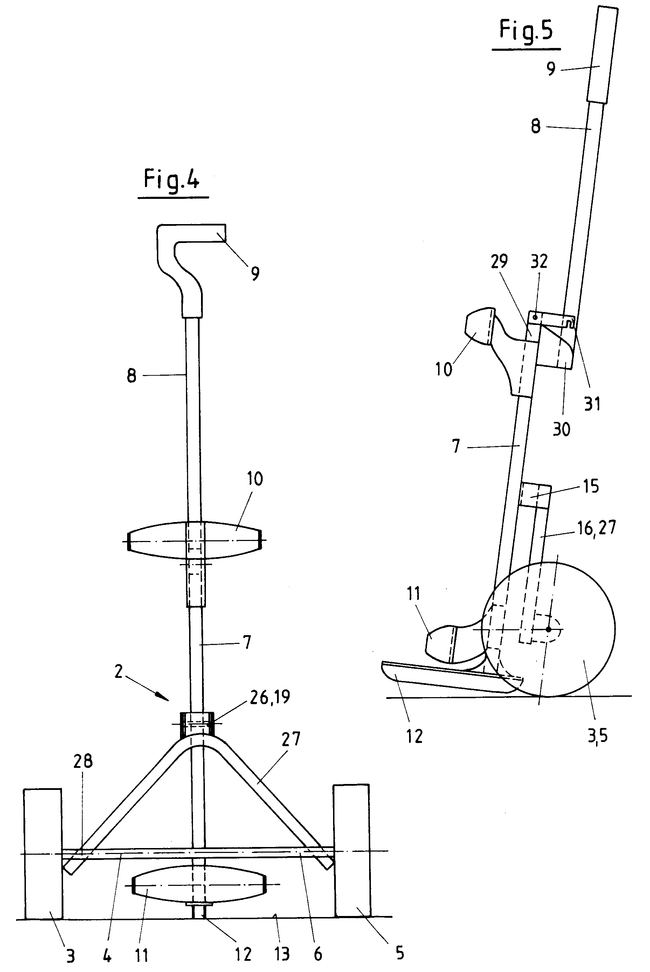

Mit dem Gestellrahmen 7 praktisch eine Einheit bildend ist ein Fahrhebel 8 vorgesehen, der teleskopartig in den Gestellrahmen 7 einschiebbar und aus diesem herausziehbar ist. Oben am freien Ende des Fahrhebels 8 ist ein Griff 9 angeordnet, dessen Form aus Fig. 4 erkennbar ist. Im Abstand zueinander sind am oberen und unteren Ende des Gestellrahmens 7 Halterungen 10, 11 für das hier nicht dargestellte Bag vorgesehen. Das untere Ende des Gestellrahmens 7 bildet dann die Bagstütze 12, die in der Standposition sich auf dem Erdboden 13 abstützt.

Bei der aus Fig. 1 ersichtlichen Ausführung des Wagens 1 sind die Achsen 4, 6 mit den Rädern 3, 5 an einem Querholm 15 und einem Doppelbügel 16 gelagert und wie schon erwähnt damit schwenkbar mit dem Gestellrahmen 7 verbunden. Hierzu besteht der Doppelbügel 16 aus zwei Teilbügeln 17, 18 wie in Fig. 2 angedeutet, die um die Lagerung 26 verschwenkbar sind und zwar aus der in Fig.1 ausgezogenen Position in die gestrichelte Position, wobei die gestrichelte Position die Fahrposition ist. Die beiden Teilbügel 17, 18 sind über ein Halteschloß 19 miteinander verbunden, so daß sie in der in Fig. 2 gezeigten Endposition verrastbar sind oder auch in mehreren dazwischen gelagerten Positionen, wenn das Halteschloß 19 dies aufgrund seiner Ausführung hergibt.

Beim Teleskopieren des Fahrhebels 8 muß sichergestellt sein, daß er in der in Fig. 1 dargestellten aus-gezogenen Position wirksam fixiert ist. Hierzu ist ein Schwenkhebel 20 vorgesehen, der nach Fig. 3 die Form eines Schneppers 21 aufweist, der mit seinem Zapfen 22 in entsprechende Kerben 23 im Fahrhebel 8 einrastet. Eine solche Kerbe 23 muß in der aus Fig. 1 ersichtlichen ausgezogenen Position vorhanden sein. Darüber hinaus ist es auch denkbar, daß in Zwischenpositionen solche Kerben vorgesehen sind, um auf diese Art und Weise unterschiedliche Ausziehlängen des Fahrhebels 8 vorzugeben. Statt der Kerben 23 können auch im Fahrhebel 8 Bohrungen vorgesehen werden.

Denkbar ist es aber auch, daß nicht nur am unteren Rand 25 des Fahrhebels 8 solche Kerben 23 vorgesehen sind, sondern auch am oberen Rand 24, so daß auch in der eingeschobenen Position des Fahrhebels 8 eine Verrastung erfolgen kann.

Bei Fig. 4 handelt es sich um die Vorkopfansicht der aus Fig. 1 ersichtlichen Ausführung des Wagens 1, nur daß hier statt des Doppelbügels 16 ein Rohrbogen 27 vorgesehen ist. Dieser Rohrbogen 27 ist im Bereich der Lagerung 26 schwenkbar mit dem Querholm 15 verbunden oder sonst wie am Gestellrahmen 7 gelagert, wobei der darüber hinaus auch in der Höhe noch bewegt werden kann, um auf diese Art und Weise den gleichen Effekt zu erreichen, wie er an Hand der Fig. 1 erläutert worden ist, nämlich um die Achsen 4, 6 in einen größeren Abstand zum Gestellrahmen 7 zu bringen oder um sie an diesen heranzuschwenken, wenn man die Transportposition erreichen will.

An den Enden des Rohrbogens 27 sind Achshalterungen 28 vorgesehen, um hier die vereinfacht wiedergegebenen Achsen 4, 6 günstig lagern zu können. Einzelheiten dazu werden weiter hinten noch erläutert.

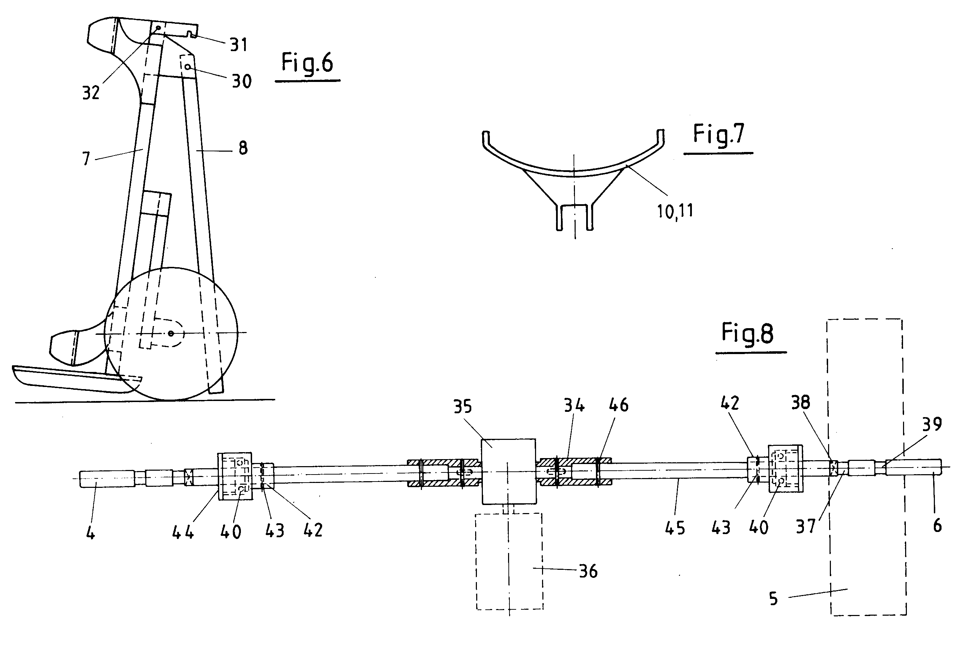

Abweichend von der in Fig. 4 gezeigten Ausführung und der Ausführung nach Fig. 1 ist bei der Ausführung nach Fig. 5 ein Verschwenken des Fahrhebels 8 vorgesehen. Dieser ist hierzu am oberen Rand 29 um ein dort vorgesehenes Gelenk 30 verschwenkbar und kann wie in Fig. 6 angedeutet an den Gestellrahmen 7 herangeschwenkt werden. Mit 31 ist ein Haken bezeichnet, über den der Fahrhebel 8 in der in Fig. 1 dargestellten Position fixiert werden kann, so daß sich der Fahrhebel 8 nicht unbeabsichtigt aus dieser Position herausbewegen läßt, sondern nur durch Anheben des Hakens 31, der seinerseits wieder um die Kurzachse 32 schwenkbar ist.

Fig. 5 ist insofern nicht eine genaue Wiedergabe der Transportposition, weil hier die Achsen 4, 6 mit den Rädern 3, 5 relativ dicht am Gestellrahmen 7 positioniert sind, so daß sich eine relativ unsichere Standposition ergibt. Besser ist es, wenn die Achsen 4, 6 bzw. der Rohrbogen 27 über hier nicht dargestellte Stangen mit dem Fahrhebel 8 verbunden ist, so daß er beim Hochklappen des Fahrhebels 8 in die in Fig. 1 gestrichelt wiedergegebene Position verschwenkt wird. Dadurch entfernen sich die Achsen 4, 6 entsprechend weit vom Gestellrahmen 7. Dagegen würden bei der aus Fig. 6 ersichtlichen Position sich die Achsen 4, 6 dicht an den Gestellrahmen 7 anlehnen, so daß sie eine günstige, kompakte Transportkonfiguration ergibt.

Fig. 7 zeigt eine Halterung 10 bzw. 11 in Draufsicht. Hier wird deutlich, daß durch die gabelförmige Ausbildung dieser Halterung 10, 11 eine günstige Abstützung für das Bag erreicht ist. In der Regel wird durch einen hier nicht dargestellten Riemen das Bag dann wirksam in dieser Halterung 10, 11 festgelegt.

Fig. 8 schließlich zeigt in einer Draufsicht die beiden miteinander verbundenen Achsen 4, 6, die endseitig Räder 5 bzw. 3 und 5 aufweisen. Diese Achsen 4,6 sind in Achshülsen 34 eingeführt, die mit dem Radgetriebe 35 verbunden sind. Dieses Radgetriebe 35 ist ein Schneckenradgetriebe mit i = 24 : 1, das mit dem Antriebsmotor 36 verbunden ist, was in Fig. 8 auch angedeutet ist. Über den Antriebsmotor 36 und das Schneckenradgetriebe 35 werden die Achshülsen 34 gedreht und zwar jeweils in die gleiche Richtung, so daß sich der Wagen 1 wunschgemäß vorwärts oder rückwärts bewegt.

Endseitig der Achsen 4, 6 sind zwei Achsrillen 37 und 39 vorgesehen. Dabei ist nur die innere Achsrille 37 mit einem Kuppelvierkant 38 ausgerüstet, der mit dem Vierkant der Räder 3, 5 korrespondiert. Dadurch ist nur dann ein Mitdrehen der Räder 3, 5 möglich und gewollt, wenn die Räder 3, 5 sich auf der inneren Achsrille 37 befinden. Soll dagegen beispielsweise wegen Ausfall des Antriebsmotors 36 ein Leerlauf erreicht werden, so werden die Druckschnepper der Räder 3, 5, die hier nicht gezeigt sind, betätigt und das jeweilige Rad bzw. beide Räder 3, 5 werden aus der Achsrille 37 herausgenommen und in die Achsrille 39 geschoben bzw. gezogen, wo sie durch Loslassen des Druckschneppers fixiert sind. Dann kann der gesamte Wagen 1 ohne Probleme im Leerlauf vorwärts bewegt werden, ohne daß dies ein Erschwernis darstellt.

Weiter vorne ist bereits erläutert worden, daß sich endseitig des Rohrbogens 27 oder auch der Teilbügel 17, 18 Achshalterungen 28 befinden, die gemäß Fig. 8 ein Kugellagergehäuse 40 aufweisen. Diese Kugellagergehäuse 40 ist über einen Deckel 44 verschlossen und über eine Feststellhülse 42 mit Stift 43 so festgelegt, daß die darin gelagerten Achsen 4, 6 sich leicht mit den Rädern 3, 5 drehen lassen.

Mit 45 ist der Schiebesitz des Kugellagergehäuses 40 bezeichnet, um anzudeuten, daß dann, wenn es notwendig oder durch den Verstellmechanismus des Rohrbogens 27 bzw. Doppelbügels 16 sich dies als notwendig erweist, das Kugellagergehäuse 40 auf der Achse 4 bzw. 6 verschoben werden kann. Mit 46 sind die entsprechenden Haltestifte bezeichnet.

Der an Hand der Figuren erläuterte Wagen 1 unterscheidet sich lediglich dadurch, daß für den Fahrhebel 8 einmal eine teleskopierbare und einmal eine klappbare Ausführung wiedergegeben ist. Die teleskopierbare Ausführung hat den Vorteil, daß sie weniger platzaufwendig ist und daß sie vorteilhaft auch verwirklicht werden kann, wenn Gestellrahmen 7 und Fahrhebel 8 aus Aluminiumrohren bestehen und zwar zweckmäßigerweise aus Vierkantrohren, um eine immer gleiche Position vorzugeben. Der Wagen 1 kann leicht in die Fahr- bzw. in die Transportposition gebracht werden, wobei er sich in beiden Positionen durch günstige Abmessungen auszeichnet und auch weiter dadurch, daß er günstigste Eigenschaften bezüglich des Gewichtes aufweist.

Falls erforderlich kann dort, wo die Bagstütze 12 vorgesehen ist, auch ein zusätzliches drittes Rad angeordnet werden, was sich insbesondere dann als vorteilhaft erweist, wenn relativ aufwendige Bags transportiert werden sollen und damit relativ hohe Gewichte. Hier ist es zweckmäßig, wenn man einen Steckanschluß vorsieht, so daß dieses dritte Rad im Bedarfsfall und das vor allem auch beim Transport leicht abgenommen werden kann.

Alle genannten Merkmale, auch die den Zeichnungen allein zu entnehmenden, werden allein und in Kombination als erfindungswesentlich angesehen.

## Patentansprüche

1. Wagen zum Transport des Golfbestecks und Zubehörs sowie von Kleinlasten wie Briefe, Päckchen und Pakete und eingekaufte Waren mit einem lenkbaren Fahrgestell, das aus den im Abstand zueinander gehaltenen, um Achsen drehenden Rädern, dem annähernd senkrecht dazu angeordneten und die Halterungen für das Bag aufweisen-den und auf der Rückseite die Batterie für den Antriebsmotor tragenden Gestellrahmen besteht, dem ein in der Wirklänge veränderbarer Fahrhebel mit Griff zugeordnet ist,
**dadurch gekennzeichnet,**
daß die Achsen (4, 6) der Räder (3, 5) verlängert und miteinander verbunden ausgebildet und in Achsverbindungshülsen (34) eines mit dem Antriebsmotor (36) verbundenen Radgetriebes (35) einführbar sind, daß für jedes mit einem Druckschnepper ausgerüstete Rad (3, 5) im Abstand zueinander ausgebildete Achsrillen (37, 39) vorgesehen sind, von denen nur die in Richtung Radgetriebe (35) angeordnete Achsrille (37) mit einem, mit den Rädern korrespondierenden Kuppelvierkant (38) ausgerüstet ist und daß der Gestellrahmen (7) und der Fahrhebel (8) aus Aluminiumrohren bestehen.

2. Wagen nach Anspruch 1,
**dadurch gekennzeichnet,**
daß der Fahrhebel (8) in den Gestellrahmen (7) einschiebbar ist, wobei am oberen Rand (29) des Gestellrahmens ein in entsprechende Kerben (23) im Fahrhebel einrastender Schnepper (21) vorgesehen ist.

3. Wagen nach Anspruch 1 und Anspruch 2,
**dadurch gekennzeichnet,**
daß der Fahrhebel (8) und der Gestellrahmen (7) als Aluminium-Vierkantrohre ausgebildet sind.

4. Wagen nach Anspruch 2,
**dadurch gekennzeichnet,**
daß mehrere mit dem Schnepper (21) zusammenwirkende Kerben (23) im Fahrhebel (8) über dessen Länge verteilt ausgebildet sind, auf jeden Fall aber jeweils an seinem unteren Rand (24, 25) vorgesehen sind.

5. Wagen nach Anspruch 2 und Anspruch 4,
**dadurch gekennzeichnet,**
daß als Schnepper (21) ein mit einer Zugfeder gegen das Fahrgestell (2) angedrückter Schwenkhebel (20) mit Zapfen (22) dient.

6. Wagen nach Anspruch 1,
**dadurch gekennzeichnet,**
daß die Räder (3, 5) und die sie verbindenden Achsen (4, 6) über einen Querholm (15) und einen Doppelbügel (16), von dem ein Teilbügel (17) um die Lagerung (26) am Querholm verschwenkbar ist, mit dem Gestellrahmen (7) verbunden ist.

7. Wagen nach Anspruch 6,
**dadurch gekennzeichnet,**
daß die den Doppelbügel (16) bildenden Teilbügel (17, 18) über ein bewegliches Halteschloß (19) miteinander verbunden sind.

8. Wagen nach Anspruch 1,
**dadurch gekennzeichnet,**
daß der Fahrhebel (8) um ein am oberen Rand (29) des Gestellrahmens (7) angeordnetes, versetzt dazu positioniertes Gelenk (30) gegen diesen schwenkbar und in dieser Stellung in einen Haken (31) einrastend ausgebildet ist.

9. Wagen nach Anspruch 1,
**dadurch gekennzeichnet,**
daß dem Griff (9) des Fahrhebels (8) eine Bedienungstaste zum Umschalten von Vor- auf Rückwärtsfahrt zugeordnet ist, die mit dem Antriebsmotor (36) verbunden ist.

10. Wagen nach Anspruch 1,
**dadurch gekennzeichnet,**
daß das Radgetriebe (35) als Schneckenradgetriebe mit i = 24 : 1 ausgebildet und der Antriebsmotor (36) ein Gleichstrommotor mit n = 3 100 U/min ist.

11. Wagen nach Anspruch 1,
**dadurch gekennzeichnet,**
daß die Räder (3, 5) und die sie verbindenden Achsen (4, 6) über einen im Querholm (15) schwenkbar gelagerten Rohrbogen (27) mit dem Gestellrahmen (7) verbunden sind, der an den freien Enden die Achshalterungen (28) aufweist.

12. Wagen nach Anspruch 11,
**dadurch gekennzeichnet,**
daß die Achshalterungen (28) ein Kugellagergehäuse (40) aufweisen.
